(19)

Europäisches
Patentamt
European
Patent Office
Office européen
des brevets

(11) **EP 4 510 072 A1**

(12) **EUROPEAN PATENT APPLICATION**
published in accordance with Art. 153(4) EPC

(43) Date of publication:
**19.02.2025 Bulletin 2025/08**

(21) Application number: **22937197.6**

(22) Date of filing: **28.10.2022**

(51) International Patent Classification (IPC):
**G06T 7/00** (2017.01)

(86) International application number:
**PCT/CN2022/128387**

(87) International publication number:
**WO 2023/197564 (19.10.2023 Gazette 2023/42)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **13.04.2022 CN 202210385121**

(71) Applicant: **Insight Lifetech Co., Ltd.**
**Shenzhen, Guangdong 518000 (CN)**

(72) Inventor: **ZHUANG, Jianchun**
**Shenzhen, Guangdong 518000 (CN)**

(74) Representative: **Isern Patentes y Marcas S.L.**
**Avda. Diagonal, 463 Bis, 2°**
**08036 Barcelona (ES)**

(54) **LABELING METHOD FOR VASCULAR ULTRASOUND IMAGE, AND DEVICE AND MEDIUM**

(57) A method, device and medium for annotating a vascular ultrasound image are described. The method comprises: determining a plurality of discrete points of a contour of a target area in a vascular ultrasound image; determining a target path of the plurality of discrete points; and in the target path, determining a target curve segment between each pair of two adjacent discrete points, and then obtaining a target curve corresponding to the contour, wherein determining the target curve segment comprises: obtaining two discrete points except the two adjacent discrete points in the target path as two auxiliary points, and determining two discrete point sets based on the two adjacent discrete points and the two auxiliary points, determining an allocated curve segment corresponding to each of the two discrete point sets based on a target circle and a concave direction both corresponding to each of the two discrete point sets, and performing allocating based on two allocated curve segments corresponding to the two discrete point sets to obtain a target curve segment. Therefore, the target curve better fitting the contour of the target area can be obtained.

Fig. 8

EP 4 510 072 A1

**Description**

**BACKGROUND OF INVENTION**

**Field of Invention**

The present disclosure relates to the field of image technology, and specifically relates to a method, device and medium for annotating a vascular ultrasound image.

**Description of Related Art**

Intravascular ultrasound (IVUS) may effectively help doctors observe the characteristics of lesions inside blood vessels. For example, for the application of IVUS in clinical surgery, it can assist in determining the location of lesions and the severity of lesions prior to surgery, and assist in analyzing the nature of lesions. In addition, in terms of the size selection of stents, IVUS can also provide important information such as the diameter of a lumen.

At present, the information provided by IVUS images can be divided into two aspects: qualitative evaluation and quantitative measurement. Qualitative evaluation may include, for example, a determination of the nature of a plaque, the presence or absence of thrombosis, anatomical features, or the implantation status of previous stents. Quantitative measurement may include, for example, measurements of lumen (that is, intima), blood vessels (that is, tunica media), plaque load, or the length of a lesion area. Therefore, how to determine a target area in an IVUS image is crucial. Prior methods for determining the target area generally adopt a tracing method. In the common tracing method, several discrete control points of a contour of the target area are first selected, and then interpolation connection is performed.

However, various interpolation methods have a great influence on whether the final curve fits the contour of the target area, and then the accuracy of quantitative measurement is affected. For example, the curve drawn by a common interpolation method (such as parabolic interpolation and Bessel interpolation) does not fit the target area well enough (that is, it is not round enough). Therefore, how to obtain a curve that better fits the contour of the target area remains to be studied.

**SUMMARY OF INVENTION**

The present disclosure is proposed in view of the above-mentioned situation and aims to provide a method, device and medium for annotating a vascular ultrasound image, by which a target curve that better fits a contour of the target area can be obtained.

For the above purpose, a first aspect of the present disclosure provides an annotation method for a vascular ultrasound image, comprising: determining a plurality of discrete points of a contour of a target area in the vascular ultrasound image; determining a target path of the plurality of discrete points, wherein the target path is closed; and in the target path, determining a target curve segment between each pair of two adjacent discrete points, and then obtaining a target curve corresponding to the contour, wherein, making each pair of two adjacent discrete points to be an adjacent point pair, determining the target curve segment of the adjacent point pair comprises: obtaining two discrete points in the target path except the discrete points of the adjacent point pair as two auxiliary points, wherein each of the two auxiliary points is adjacent to one discrete point of the adjacent point pair, determining two discrete point sets, wherein each of the two discrete point sets includes one auxiliary point of the two auxiliary points and the adjacent point pair, and auxiliary points of the two discrete point sets are different auxiliary points in the two auxiliary points, determining a allocated curve segment corresponding to each of the two discrete point sets based on a target circle and a concave direction both corresponding to each of the two discrete point sets, wherein the blended curve segment is between the discrete points of the adjacent point pair and belongs to the target circle, the concave direction is determined by the positions and a preset order of the discrete points in each of the two discrete point sets; and performing allocating based on the two allocated curve segments corresponding to the two discrete point sets to obtain the target curve segment. In this case, the target curve segment passing through the two adjacent discrete points is obtained by allocating the circular arcs of the adjacent discrete points, so that the target curve that fits the contour of the target area can be obtained. In addition, the use of fewer discrete points to obtain the target curve corresponding to the contour of the target area can be supported and the computational volume is small.

In addition, in the annotation method related to the first aspect of the present disclosure, optionally, determining the target path of the plurality of discrete points, further comprises: establishing a polar coordinate system; converting the coordinates of each of the plurality of discrete points into the coordinates based on the polar coordinate system; and sorting the plurality of discrete points according to the angles of the coordinates of the polar coordinate system to determine the target path. In this case, the plurality of discrete points on the plane are sorted by surrounding through the polar coordinate system, and then the target path obtained by sorting can be more consistent with the characteristics of the contour of the target area. Therefore, the connection relationship between the discrete points can be conveniently determined.

In addition, in the annotation method related to the first aspect of the present disclosure, optionally, establishing the polar coordinate system, further comprises: the coordinates of each of the plurality of discrete points are the coordinates of a rectangular coordinate system, obtaining the coordinates of the geometric center of the plurality of discrete points, taking the coordinates of the geometric center as a pole, and taking a preset direction as the positive direction of a polar axis to establish the polar coordinate system. Therefore, the polar coordinate system can be established.

In addition, in the annotation method related to the first aspect of the present disclosure, optionally, determining the allocated curve segment corresponding to each of the two discrete point sets based on the target circle and the concave direction both corresponding to each of the two discrete point sets, further comprises: in the target circle corresponding to each of the two discrete point sets, a circular arc from one discrete point of the adjacent point pair to another discrete point in the preset order, and in the concave direction is used as the allocated curve segment corresponding to each of the two discrete point sets. Therefore, the allocated curve segment may be determined based on the concave direction.

In addition, in the annotation method related to the first aspect of the present disclosure, optionally, the concave direction is determined by the positions and the preset order of the discrete points in each of the two discrete point sets, further comprises: making a first vector to be a vector from the first discrete point to the second discrete point in the preset order in each of the two discrete point sets, and making a second vector to be a vector from the first discrete point to the third discrete point in the preset order in each of the two discrete point sets; and obtaining the cross product result of the first vector and the second vector as a third vector, if the direction of the third vector is upward, it is indicated that the concave direction is counterclockwise, if the direction of the third vector is downward, it is indicated that the concave direction is clockwise; or if the angle of the first vector rotated clockwise to the second vector is less than 180°, it is indicated that the concave direction is clockwise; if the angle of the first vector rotated counterclockwise to the second vector is less than 180°, it is indicated that the concave direction is counterclockwise. Therefore, the concave direction can be conveniently determined by the cross product. In addition, the concave direction can be conveniently determined by the angle between the vectors.

In addition, in the annotation method related to the first aspect of the present disclosure, optionally, the target area includes the area of at least one kind target in tunica media and intima of the blood vessel. Therefore, the target curve corresponding to the contour of the area of tunica media and intima of the blood vessel can be subsequently determined.

In addition, in the annotation method related to the first aspect of the present disclosure, optionally, performing allocating based on the two allocated curve segments corresponding to the two discrete point sets to obtain the target curve segment, further comprises: using any discrete point in the adjacent point pair as a starting point; starting from the starting point, determining a preset number of first allocated points evenly distributed along a first curve segment and the preset number of second allocated points evenly distributed along a second curve segment, wherein, the two allocated curve segments include the first curve segment and the second curve segment; and determining interpolation points between the discrete points of the adjacent point pair based on the first allocated points and the second allocated points, and obtaining the target curve segment based on the interpolation points. In this case, the allocated points are obtained based on the two allocated curve segments determined by the four discrete points corresponding to the adjacent point pair, and the interpolation points are obtained based on the allocated points, and then the target curve segment is obtained. Therefore, the target curve segment can be made to better fit the contour of the target area.

In addition, in the annotation method related to the first aspect of the present disclosure, optionally, the first curve segment is the allocated curve segment corresponding to one of the two discrete point sets of which the auxiliary point is adjacent to the starting point, and the second curve segment is the allocated curve segment corresponding to one of the two discrete point sets of which the auxiliary point is not adjacent to the starting point, the coordinates $M_i$ of the i-th interpolation point between the discrete points of the adjacent point pair satisfy the formula:

$$M_i = \frac{(N-i)}{N} \times U_i + \frac{i}{N} \times V_i$$

, wherein, N represents the preset number, $U_i$ represents the coordinates of the i-th first allocated point, $V_i$ represents the coordinates of the i-th second allocated point. In this case, the closer the discrete point set is to the corresponding discrete point in the adjacent point pair, the higher the weight of the allocated curve segment corresponding to the discrete point set, and then the transition between the obtained target curve segment and the adjacent curve segment can be smoother.

A second aspect of the present disclosure provides an electronic device which includes at least one processing circuit configured to perform the steps of the annotation method of the first aspect of the present disclosure.

A third aspect of the present disclosure provides a computer-readable storage medium which stores at least one instruction, and when the at least one instruction is executed by a processor, the steps of the annotation method of the first aspect of the present disclosure are implemented.

According to the present disclosure, provided are a method, device and medium for annotating a vascular ultrasound image, by which a target curve that better fits a contour of the target area can be obtained.

## BRIEF DESCRIPTION OF THE DRAWINGS

Now, the present disclosure is further explained in detail only with reference to examples of accompanying drawings, in which:

Fig. 1 is a schematic diagram showing an application of an intravascular ultrasound system related to an example of the present disclosure.

Fig. 2 is a schematic diagram showing a plurality of discrete points of a contour of a target area of a vascular ultrasound image related to an example of the present disclosure.

Fig. 3 is a flow chart showing an example of determining a target curve segment of an adjacent point pair related to an example of the present disclosure.

Fig. 4A is a schematic diagram showing a target circle and a concave direction corresponding to a first discrete point set related to an example of the present disclosure.

Fig. 4B is a schematic diagram showing a allocated curve segment corresponding to the first discrete point set related to an example of the present disclosure.

Fig. 5A is a schematic diagram showing a target circle and a concave direction corresponding to a second discrete point set related to an example of the present disclosure.

Fig. 5B is a schematic diagram showing a allocated curve segment corresponding to the second discrete point set related to an example of the present disclosure.

Fig. 6 is a schematic diagram showing a first vector and a second vector corresponding to the first discrete point set related to an example of the present disclosure.

Fig. 7 is a flow chart showing an example of blending based on two allocated curve segments related to an example of the present disclosure.

Fig. 8 is a schematic diagram showing allocating based on the two allocated curve segments related to an example of the present disclosure.

Fig. 9 is a flow chart showing an example of a method for annotating a vascular ultrasound image related to an example of the present disclosure.

Fig. 10 is a schematic diagram showing a target curve corresponding to the plurality of discrete points in Fig. 2.

Fig. 11 is a block view showing an example of an annotation system for a vascular ultrasound image related to an example of the present disclosure.

Fig. 12A is a schematic diagram showing a plurality of discrete points of a contour of the media on a vascular ultrasound image related to an example of the present disclosure.

Fig. 12B is a schematic diagram showing the contour of the media corresponding to the plurality of discrete points of Fig. 12A obtained using a parabolic interpolation solution.

Fig. 12C is a schematic diagram showing the contour of the tunica media corresponding to the plurality of discrete points of Fig. 12A obtained using a solution of the present disclosure.

## DETAILED DESCRIPTION

Hereinafter, preferred embodiments of the present disclosure will be described in detail with reference to the accompanying drawings. In the following description, the same components are denoted by the same reference numerals, and the description thereof will not be repeated. In addition, the accompanying drawings are merely schematic diagrams, and the ratio of the dimensions of the components to each other or the shapes of the components may be different from the actual ones. It should be noted that the terms "comprising" and "having", and any variants thereof, such as processes, methods, systems, products, or devices, which include or have a series of steps or units, are not necessarily limited to those steps or units are provided, but may include or have other steps or units not explicitly listed or inherent to such processes, methods, products or devices. All described methods in the present disclosure may be performed in any suitable order, unless otherwise indicated herein or clearly contradictory to the context.

The term "polar coordinate system" in the present disclosure may refer to a coordinate system consisting of a pole, a polar axis and a polar diameter in a plane. Specifically, a point can be chosen and defined on the plane, called the pole, and a ray can be drawn from the pole, called the polar axis. In this case, the coordinates of any point in the plane can be represented by the distance between the point and the pole and the angle between the point and the polar axis.

In the solutions related to the examples of the present disclosure, a target path of a plurality of discrete points is determined, for two adjacent discrete points in the target path, two discrete points except each pair of two adjacent discrete points are obtained as two auxiliary points, allocated curve segments are obtained based on two sets of discrete points (that is, two subsequent discrete point sets) and a concave direction corresponding to each of the two sets of discrete points, wherein, the two sets of discrete points are respectively formed by the two auxiliary points with the two adjacent discrete points, the two allocated curve segments are allocated to obtain a target curve segment of the two adjacent discrete points, and then a target curve corresponding to the plurality of discrete points is determined. In some examples, the concave direction corresponding to the three discrete points of each of the above-mentioned two sets of discrete points may be determined based on an order of the three discrete points by using cross product. Therefore, the concave direction can be determined conveniently and quickly.

In addition, the above-mentioned two auxiliary points may be any discrete points except each pair of two adjacent discrete points in the target path. In some examples, the above-mentioned two auxiliary points may be discrete points located on either side of each pair of two adjacent discrete points in the target path, respectively. Preferably, each of the two auxiliary points may be adjacent to one discrete point in each pair of two adjacent discrete points. That is, the above-mentioned two auxiliary points may be discrete points located adjacent to each side of each pair of two adjacent discrete points in the target path, respectively. In this case, the target curve segment can be determined based on the discrete points adjacent to each pair of two adjacent discrete points.

Hereinafter, with the annotation of a vascular ultrasound image as an example, the examples of the present disclosure are described, and such descriptions do not limit the scope of the present disclosure, for those skilled in the art, other medical images may be used without limitation. In addition, the solutions related to the examples of the present disclosure may also be used in other fields besides the medical field, such as the field of path planning, to determine a rounded trajectory of a plurality of discrete points.

An annotation method for the vascular ultrasound image is related to the examples of the present disclosure (sometimes also referred to as an annotation method, a target contour planning method or a target contour drawing method, hereinafter referred to as an annotation method). In the annotation method related to the examples of the present disclosure, a target curve that better fits a contour of a target area can be obtained. In addition, the use of fewer discrete points to obtain the target curve corresponding to the contour of the target area can be supported and the computational volume is small.

The vascular ultrasound images related to the examples of the present disclosure (also referred to as intravascular ultrasound image) may be medical images in a blood vessel obtained by IVUS technology. For example, the vascular ultrasound images may be obtained by an intravascular ultrasound system related to the examples of the present disclosure.

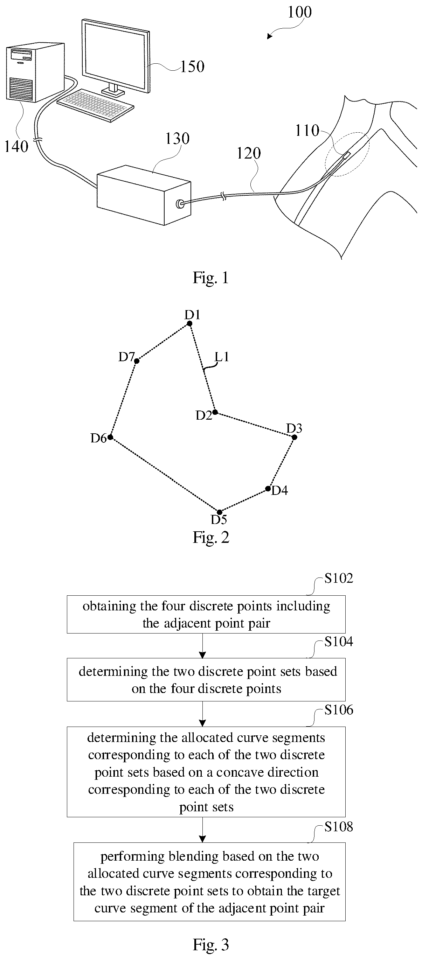

Fig. 1 is a schematic diagram showing an application of intravascular ultrasound system 100 related to an example of the present disclosure.

In some examples, as shown in Fig. 1, intravascular ultrasound system 100 may include imaging instrument 110, transmission shaft 120, and motor 130. Imaging instrument 110 may be placed in a blood vessel and transmit imaging signals to a vessel wall while rotating to obtain the vascular ultrasound images of the blood vessel. Transmission shaft 120 may be connected to imaging instrument 110 and extend along the blood vessel to out-vivo. Motor 130 may be located out-vivo and may be connected to transmission shaft 120, and actuate imaging instrument 110 via transmission shaft 120.

In some examples, imaging instrument 110 may be introduced into the blood vessel and may transmit the imaging signals to the vessel wall. In some examples, imaging instrument 110 may be an ultrasonic transducer, and the imaging signals may be ultrasonic signals (such as ultrasonic pulses). In some examples, the ultrasonic transducer may emit the ultrasonic pulses to the vessel wall along the radial direction of the blood vessel and receive ultrasound echoes with vascular information. In other embodiments, the imaging signals may also be optical signals, electromagnetic wave signals.

In some examples, motor 130 may actuate imaging instrument 110 via transmission shaft 120. In some examples, motor 130 may actuate imaging instrument 110 to rotate via transmission shaft 120. In some examples, motor 130 may actuate imaging instrument 110 to move along the extension direction of the blood vessel via transmission shaft 120.

In addition, intravascular ultrasound system 100 may also include an outer tube (not shown). The outer tube may extend along the blood vessel to out-vivo and have an inner cavity for accommodating imaging instrument 110 and transmission shaft 120. Imaging instrument 110 may rotate in the inner cavity of the outer tube.

Fig. 2 is a schematic diagram showing a plurality of discrete points of a contour of a target area of a vascular ultrasound image related to an example of the present disclosure.

In some examples, intravascular ultrasound system 100 may also include processor 140 (see Fig. 1). Processor 140 may be used to process the vascular ultrasound images. In some examples, intravascular ultrasound system 100 may also include display 150 (see Fig.1). Display 150 may be used to display the vascular ultrasound images to facilitate a user to operate the vascular ultrasound image. For example, the user may annotate the displayed vascular ultrasound images to determine the plurality of discrete points of a contour of a target area. As an example, Fig. 2 shows a schematic diagram of 7 discrete points of a contour of the tunica media or the intima of a blood vessel in a vascular ultrasound image. Wherein, the 7 discrete points may include discrete point D1, discrete point D2, discrete point D3, discrete point D4, discrete point D5, discrete point D6 and discrete point D7. The following examples may be described using the 7 discrete points as an example.

In the annotation method related to the examples of the present disclosure, a plurality of discrete points of a contour of a target area in a vascular ultrasound image may be determined, a target path of the plurality of discrete points is determined, and in the target path, a target curve segment between each pair of two adjacent discrete points is determined, and then a target curve corresponding to the contour of the target area is obtained.

In addition, the target path may be used to represent the adjacency relationship between each of discrete points. That is, the target path may be used to determine a discrete point adjacent to each of discrete points. In some examples, the target path may be closed. That is, the starting discrete point and the ending discrete point in the target path may be consistent. For example, for the plurality of discrete points of the contour of the target area in the vascular ultrasound image, since the target area is a cross-sectional area related to the blood vessel (such as tunica media and intima of the blood vessel), the target path may be closed, and the target curve finally obtained may be a circle-like closed curve. As an example, Fig. 2 shows a schematic diagram of target path L1 of the above-mentioned 7 discrete points. It should be noted that the figure does not indicate that target path L1 is a connected line segment. Wherein, discrete point D1 and discrete point D2, discrete point D2 and discrete point D3, ..., discrete point D7 and discrete point D1 are respectively two adjacent discrete points in target path L1.

However, the examples of the present disclosure are not limited to thereto, in other examples, the target path may not be closed. For example, the target curve segment between partial two adjacent discrete points (such as at least one pair) may be determined in the target path, and then the target curve corresponding to the contour of the target area is obtained.

In addition, in the target path, any three adjacent discrete points may be non-collinear. Therefore, a target circle can be subsequently determined based on the three discrete points.

As mentioned above, in the annotation method related to the examples of the present disclosure, the target curve segment between each pair of two adjacent discrete points may be determined. The following first describes a method for determining the target curve segment between two adjacent discrete points related to the examples of the present disclosure (hereinafter referred to as an adjacent point connection method) in detail with the accompanying drawings. For the convenience of description below, each pair of two adjacent discrete points is referred to as an adjacent point pair. Fig. 3 is a flow chart showing an example of determining a target curve segment of an adjacent point pair related to an example of the present disclosure.

In the adjacent point connection method related to the examples of the present disclosure, the target curve segment between two discrete points in the middle (that is, the two adjacent discrete points) may be determined based on four discrete points. Preferably, the four discrete points may be adjacent discrete points in the target path. In this case, the target curve segment between the two adjacent discrete points is determined with the discrete points before and after the two adjacent discrete points, which can make the transition between the target curve segment and adjacent target curve segments smoother, and the target curve segment that better fits the contour of the target area can be obtained.

As shown in Fig. 3, the adjacent point connection method may include step S102. In step S102, the four discrete points including the adjacent point pair may be obtained.

In some examples, the four discrete points may include the adjacent point pair and two auxiliary points. In some examples, two discrete points except the discrete points of the adjacent point pair in the target path may be obtained as the two auxiliary points to determine the four discrete points. In some examples, the two discrete points on both sides (such as front and back) of the adjacent point pair in the target path may be obtained as the two auxiliary points to determine the four discrete points.

Preferably, the two discrete points adjacent to the adjacent point pair in the target path may be obtained as the two auxiliary points to determine the four discrete points. Specifically, the two discrete points except the discrete points of the adjacent point pair in the target path may be obtained as the two auxiliary points, wherein each of the two auxiliary points may be adjacent to one discrete point of the adjacent point pair (that is, the two auxiliary points may not belong to the adjacent point pair). Therefore, the four discrete points including the adjacent point pair can be obtained. For example, the two auxiliary points may include a first auxiliary point and a second auxiliary point, wherein the first auxiliary point and the second auxiliary point may not belong to the adjacent point pair.

Take the auxiliary points are discrete points located on both sides of the adjacent point pair and adjacent to the adjacent point pair as an example, as shown in Fig. 2, for the adjacent point pair of discrete point D1 and discrete point D2, the corresponding four discrete points may include discrete point D7, discrete point D1, discrete point D2 and discrete point D3, wherein discrete point D7 and discrete point D3 may be the two auxiliary points.

In other examples, the user's selection operation on discrete points may also be received to determine the four discrete points. In other examples, the corresponding coordinate system (such as the polar coordinate system) may also be selected to sort discrete points to determine the four discrete points. In other examples, the adjacency relationship between discrete points may also be pre-set. That is, the four discrete points corresponding to each of adjacent point pairs may be pre-set.

In addition, in case where there are only three discrete points in the target path, the above-mentioned two auxiliary points may be the same discrete point. That is, the first auxiliary point and the second auxiliary point may be the same discrete point. Therefore, in the subsequent steps, the two discrete point sets corresponding to the adjacent point pair are the same, and then the two allocated curve segments corresponding to the two discrete point sets are also the same, and the final target curve segment is the allocated curve segment (that is, regardless of whether the blending is based on the two allocated curve segments, the target curve segment is the allocated curve segment).

As shown in Fig. 3, the adjacent point connection method may include step S104. In step S104, the two discrete point sets may be determined based on the four discrete points obtained in step S102.

In addition, each of the discrete point sets may include one auxiliary point of the above-mentioned two auxiliary points and the adjacent point pair, and auxiliary points of the two discrete point sets may be different auxiliary points in the two auxiliary points. Specifically, the two discrete point sets may include a first discrete point set and a second discrete point set, the first discrete point set may include the first auxiliary point and the adjacent point pair, and the second discrete point set may include the second auxiliary point and the adjacent point pair. Therefore, the two discrete point sets can be obtained.

For example, as shown in Fig. 2, for the adjacent point pair of discrete point D1 and discrete point D2, the first discrete point set may include discrete point D7, discrete point D1 and discrete point D2, and the second discrete point set may include discrete point D1, discrete point D2 and discrete point D3. It should be noted that, unless otherwise specified, the first discrete point set and the second discrete point set related to the following examples may assume that the first discrete point set includes discrete point D7, discrete point D1 and discrete point D2, and the second discrete point set includes discrete point D1, discrete point D2 and discrete point D3.

In addition, the three discrete points in the first discrete point set are not collinear, and the three discrete points in the second discrete point set are not collinear. In some examples, if there are three collinear adjacent discrete points in the target path, the discrete points may be filtered so that there are no three adjacent discrete points that are collinear in the target path.

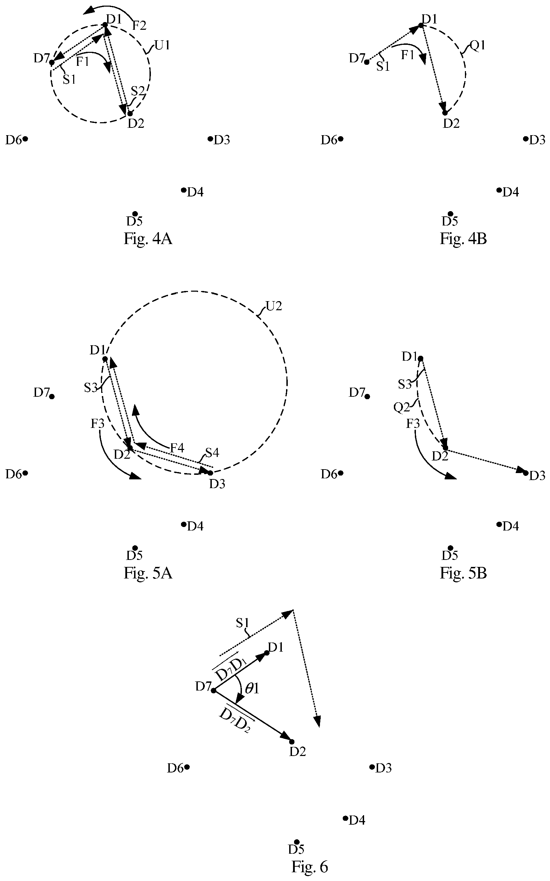

Fig. 4A is a schematic diagram showing a target circle and a concave direction corresponding to a first discrete point set related to an example of the present disclosure. Fig. 4B is a schematic diagram showing a allocated curve segment corresponding to the first discrete point set related to an example of the present disclosure.

As shown in Fig3, the adjacent point connection method may include step S106. In step S106, the allocated curve segments corresponding to each of the two discrete point sets may be determined based on a concave direction corresponding to each of the two discrete point sets.

In addition, the shape of the allocated curve segment may be a circular arc. In some examples, the allocated curve segment corresponding to each of the two discrete point sets may be determined based on a target circle and the concave direction both corresponding to each of the two discrete point sets. Wherein, the allocated curve segment corresponding to each of the two discrete point sets may be the circular arc between discrete points of the adjacent point pair and belong to the target circle.

In addition, the target circle corresponding to each of the discrete point sets may be jointly determined by the discrete points in each of the discrete point sets. In some examples, the center coordinates may be determined by the coordinates of three discrete points in each of the two discrete point sets, and then the target circle may be determined based on the center coordinates. As an example, Fig. 4A shows target circle U1 jointly determined by discrete points D7, discrete points D1 and discrete points D2 in the first discrete point set.

In addition, the concave direction corresponding to each of the discrete point sets may be determined by the positions (that is, the positions of the discrete points in the target area) and a preset order of the discrete points in each of the discrete point sets. Wherein, the concave direction may be a clockwise direction or a counterclockwise direction. That is, the concave direction may be a spatial distribution direction of the discrete points in each discrete point set under the preset order. Specifically, the concave direction may be divided into the clockwise direction and the counterclockwise direction according to the positions and the preset order of the discrete points in each of the two discrete point sets. Wherein, the preset order may be any order based on the adjacency relationship among the discrete points in each of the two discrete point sets, and may be selected as needed.

For example, as shown in Fig. 4A, for the first discrete point set, the preset order may be first order S 1 in which discrete point D7 →"discrete point D1→"discrete point D2 are sequentially arranged, or the preset order may be second order S2 in which discrete point D2→discrete point D1→discrete point D7 are sequentially arranged. Therefore, it can be seen from Fig. 4A that for first order S1, first concave direction F1 corresponding to the first discrete point set may be a clockwise direction, and for second order S2, second concave direction F2 corresponding to the first discrete point set may be a counterclockwise direction.

In some examples, the preset order corresponding to the discrete point sets of all adjacent point pairs may be consistent. That is, a unified order is used. For example, the preset order may be determined by any one direction along the target path. In other examples, the preset order corresponding to each of the two discrete point sets may be inconsistent.

As mentioned above, the allocated curve segment corresponding to each of the discrete point sets may be determined based on the concave direction corresponding to each of the discrete point sets. Specifically, based on the concave direction, the circular arc may be selected from two circular arcs located between the discrete points of the adjacent point pair in the target circle corresponding to each of the two discrete point sets as the allocated curve segment corresponding to each of the two discrete point sets.

In some examples, in the target circle corresponding to each of the discrete point sets, the circular arc from one discrete point of the adjacent point pair to another discrete point in the preset order, and in the concave direction may be used as the allocated curve segment corresponding to each of the discrete point sets. Therefore, the allocated curve segment may be determined based on the concave direction. For example, as shown in Fig. 4B, the circular arc from discrete point D1 in the first discrete point set to discrete point D2 (that is, the adjacent point pair) in first order S1 and in first concave direction F1 (that is, clockwise direction) may be used as allocated curve segment Q1 corresponding to the first discrete point set.

The target circle, the concave direction and the allocated curve segment corresponding to the discrete point set are described above by taking the first discrete point set as an example. Similarly, the target circle, the concave direction and the allocated curve segment corresponding to the second discrete point set may be obtained. Fig. 5A is a schematic diagram showing a target circle and a concave direction corresponding to a second discrete point set related to an example of the present disclosure. Fig. 5B is a schematic diagram showing a allocated curve segment corresponding to the second discrete point set related to an example of the present disclosure.

As shown in Fig. 5A, for the second discrete point set, the preset order may be third order S3 in which discrete point D1→discrete point D2→discrete point D3 are sequentially arranged, or the preset order may be fourth order S4 in which discrete point D3→discrete point D2→discrete point D1 are sequentially arranged. Therefore, it can be seen from Fig. 5A that for third order S3, third concave direction F3 corresponding to the second discrete point set may be counterclockwise, and for fourth order S4, fourth concave direction F4 corresponding to the second discrete point set may be clockwise.

In addition, an example of the allocated curve segment corresponding to the second discrete point set may be seen in Fig. 5B. As shown in Fig. 5B, the circular arc from discrete point D1 in the second discrete point set to discrete point D2 (that is, the adjacent point pair) in third preset order S3 and in third concave direction F3 (e.g., counterclockwise direction) may be used as allocated curve segment Q2 corresponding to the second discrete point set.

As mentioned above, the concave direction corresponding to each of the discrete point sets may be determined by the positions and the preset order of the discrete points in each of the discrete point sets. Those skilled in the art can adjust the method of obtaining the concave direction as needed without deviating from the definition of the concave direction. Preferably, the examples of the present disclosure also provide two methods for obtaining the concave direction.

Fig. 6 is a schematic diagram showing first vector $\overrightarrow{D_7D_1}$ and second vector $\overrightarrow{D_7D_2}$ corresponding to the first discrete point set related to an example of the present disclosure.

In some examples, both two methods for obtaining the concave direction may first determine a first vector and a second vector corresponding to each of the discrete point sets.

Specifically, the first vector may be a vector from the first discrete point to the second discrete point in the above-mentioned preset order in each of the discrete point sets, and the second vector may be a vector from the first discrete point to the third discrete point in the above-mentioned preset order in each of the discrete point sets. In addition, the first vector and the second vector may have the same starting point. Taking the first discrete point set as an example, as shown in Fig. 6, in first order S1 (that is, discrete point D7→discrete point D1→discrete point D2), the vector corresponding to first discrete point D7 to second discrete point D1 in the first discrete point set may be first vector $\overrightarrow{D_7D_1}$ The vector corresponding to first discrete point D7 to third discrete point D2 in the first discrete point set may be second vector $\overrightarrow{D_7D_2}$.

In some examples, in the first method for obtaining the concave direction, after the first vector and the second vector corresponding to each of the discrete point sets are determined, the concave direction may be obtained based on the cross product.

Specifically, the cross product result of the first vector and the second vector may be obtained as a third vector, if the direction of the third vector is upward (which can also be described as if the third vector is positive), it may be indicated that the concave direction is counterclockwise, if the direction of the third vector is downward (which can also be described as if the third vector is negative), it may be indicated that the concave direction is clockwise. Therefore, the concave direction can be conveniently determined by the cross product.

In some examples, in the second method for obtaining the concave direction, after the first vector and the second vector corresponding to each of the two discrete point sets are determined, the concave direction may be obtained based on an angle between the vectors.

Specifically, if the angle of the first vector rotated clockwise to the second vector is less than 180°, it may be indicated that the concave direction is clockwise, and if the angle of the first vector rotated counterclockwise to the second vector is less than 180°, it may be indicated that the concave direction is counterclockwise. Therefore, the concave direction can be determined by the angle between the vectors. Taking the first discrete point set as an example, as shown in Fig. 6, the angle $\theta 1$ of first vector $\overrightarrow{D_7D_1}$ rotated clockwise to second vector $\overrightarrow{D_7D_2}$ is less than 180°, so the concave direction may be clockwise. That is, the circular arc of discrete points D1 to D2 in the clockwise direction may be taken as the allocated curve segment corresponding to the first discrete point set (that is, allocated curve segment Q1 in Fig. 4B). Therefore, the concave direction can be conveniently determined by the angle between the vectors.

Back to refer to Fig. 3, the adjacent point connection method may include step S108. In step S108, the allocating may be performed based on the two allocated curve segments corresponding to the two discrete point sets to obtain the target curve segment of the adjacent point pair (hereinafter referred to as the target curve segment).

As mentioned above, the two discrete point sets may be determined. Therefore, one allocated curve segment for the adjacent point pair may be respectively determined based on the two discrete point sets, wherein the two endpoints of each of the two allocated curve segments are both discrete points in the adjacent point pair. Therefore, the two allocated curve segments corresponding to the two discrete point sets can be obtained.

In some examples, in the allocating, the target curve segment may be obtained by setting the proportion of the above-mentioned two allocated curve segments at different positions. In some examples, the target curve segment may be obtained based on interpolation points between the discrete points of the adjacent point pair. Specifically, in the allocating, the contribution of the allocated points on the two allocated curve segments to the interpolation points forming the target curve segment may be adjusted by weights to obtain the target curve segment.

As mentioned above, the center coordinates may be determined by the coordinates of the three discrete points in each of the two discrete point sets, and then the target circle may be determined. In some examples, an arc angle of the allocated curve segment corresponding to each of the two discrete point sets may be determined based on the center coordinates, and then a step length may be determined based on the arc angle and the number of the allocated points, and then the allocated points may be evenly inserted by the step length. That is, the allocated points corresponding to the allocated curve segment may be regarded as points obtained by rotating one discrete point of the adjacent point pair according to the step length to another one discrete point, along the allocated curve segment and around the center coordinates. In some examples, the step length may be the arc angle divided by the number of the allocated points.

In some examples, the arc angle of the allocated curve segment may be the absolute value of the difference between angles of the two discrete points in the adjacent point pair.

In some examples, if the coordinates of the plurality of discrete points are the coordinates of a rectangular coordinate system, the i-th allocated point $Z_i(X_i, Y_i)$ on each of the two allocated curve segments may satisfy the formula:

$$X_i = (X_1 - X_o) \times \cos(i \times step) - (Y_1 - Y_o) \times \sin(i \times step) + X_o,$$

$$Y_i = (X_1 - X_o) \times \sin(i \times step) + (Y_1 - Y_o) \times \cos(i \times step) + Y_o,$$

Wherein, $(X_i, Y_i)$ may represent the coordinates of the i-th allocated point $Z_i$ on the allocated curve segment, $(X_o, Y_o)$ may represent the above-mentioned center coordinates(that is, the center coordinates determined by the coordinates of the three discrete points in the discrete point set corresponding to the allocated curve segment), $(X_1, Y_1)$ may represent the coordinates of any discrete point in the adjacent point pair, and *step* may represent the step length.

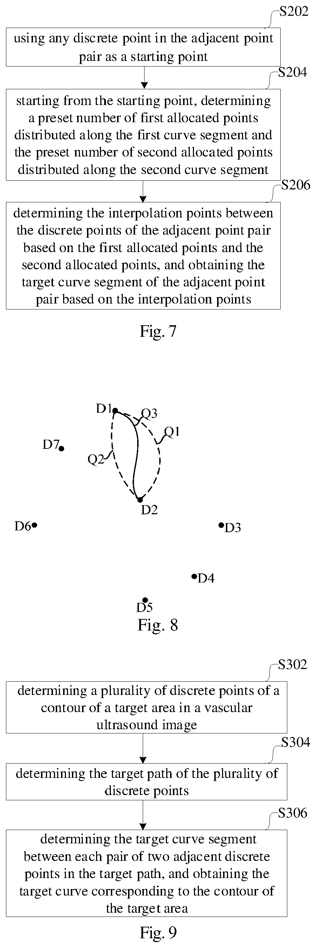

Hereinafter, an example method for allocating based on the two allocated curve segments will be described in detail with reference to Fig. 7. Fig. 7 is a flow chart showing an example of blending based on two allocated curve segments related to an example of the present disclosure. Fig. 8 is a schematic diagram showing allocating based on the two allocated curve segments related to an example of the present disclosure.

As shown in Fig. 7, the allocating based on the two allocated curve segments may include step S202. In step S202, any discrete point in the adjacent point pair may be used as a starting point.

Continuing referring to Fig. 7, the allocating based on the two allocated curve segments may include step S204. In step S204, starting from the above-mentioned starting point, a preset number of first allocated points distributed along the first curve segment and the preset number of second allocated points distributed along the second curve segment may be determined. The two allocated curve segments may include the first curve segment and the second curve segment. That is, the first curve segment may be one of the two allocated curve segments, and the second curve segment may be another allocated curve segment in the two allocated curve segments.

In some examples, the first allocated points and the second allocated points may be evenly distributed on the first curve segment and the second curve segment, respectively. Specifically, starting from the above-mentioned starting point, the preset number (e.g., 200) of the first allocated points may be evenly inserted to the first curve segment, and the preset number of the second allocated points may be evenly inserted to the second curve segment. That is, starting from the same starting point, the same number of allocated points may be evenly inserted to the first curve segment and the second curve segment.

Continuing referring to Fig. 7, the allocating based on the two allocated curve segments may include step S206. In step S206, the interpolation points between the discrete points of the adjacent point pair may be determined based on the first allocated points and the second allocated points, and the target curve segment of the adjacent point pair may be obtained based on the interpolation points. In this case, the allocated points are obtained based on the two allocated curve segments determined by the four discrete points corresponding to the adjacent point pair, and the interpolation points are obtained based on the allocated points, and then the target curve segment is obtained. Therefore, the target curve segment can be made to better fit the contour of the target area. In some examples, the interpolation points may be connected in sequence (e.g., they may be connected by fitting) to obtain the target curve segment of the adjacent point pair.

In some examples, the corresponding first allocated point and second allocated point (that is, the same position relative to the above-mentioned starting point or the same index relative to the above-mentioned starting point) may be weighted (that is, multiplied by weight) respectively to obtain the corresponding interpolation point. In some examples, the weights corresponding to the first allocated point and the second allocated point may be negatively correlated. That is, the higher the weight of the first allocated point, the lower the weight of the second allocated point, or the higher the weight of the second allocated point, the lower the weight of the first allocated point. In some examples, the sum of the weight of the first allocated point and the weight of the second allocated point may be equal to 1.

In some examples, the first curve segment may be the allocated curve segment corresponding to one of the two discrete point sets of which the auxiliary point is adjacent to the above-mentioned starting point, and the second curve segment may be the allocated curve segment corresponding to one of the two discrete point sets of which the auxiliary point is not adjacent to the above-mentioned starting point. For example, as shown in Fig. 8 , if discrete point D1 is taken as the starting point, allocated curve segment Q1 corresponding to the discrete point set of which auxiliary point (that is, discrete point D7) is adjacent to discrete point D1 (that is, the first discrete point set) may be the first curve segment, and allocated curve segment Q2 corresponding to the discrete point set of which the auxiliary point (that is, discrete point D3) is not adjacent to discrete point D1 (that is, the second discrete point set) may be the second curve segment. Similarly, if discrete point D2 is taken as the starting point, allocated curve segment Q2 may be the first curve segment, and allocated curve segment Q1 may be the second curve segment.

In this case, starting from the above-mentioned starting point, the weight of the first allocated point may decrease linearly, and the weight of the second allocated point may linearly increase. Take the target area in the vascular ultrasound image as an example. In some examples, the weight of the first allocated point may be $(N-i)/N$, and the weight of the second allocated point may be $i/N$, wherein N may represent the above-mentioned preset number, and i may represent the index of the interpolation point. Specifically, the coordinates $M_i$ of the i-th interpolation point between the discrete points of the adjacent point pair may satisfy the formula:

$$M_i = \frac{(N-i)}{N} \times U_i + \frac{i}{N} \times V_i,$$

wherein, N may represent the above-mentioned preset number, $U_i$ may represent the coordinates of the i-th first allocated point (that is, the i-th allocated point on the first curve segment), and $V_i$ may represent the coordinates of the i-th second allocated point (that is, the i-th allocated point on the second curve segment). In this case, the closer the discrete point set is to the corresponding discrete point in the adjacent point pair, the higher the weight of the allocated curve segment corresponding to the discrete point set, and then the transition between the obtained target curve segment and the adjacent curve segment can be smoother. In addition, the way for obtaining the coordinates of the interpolation points related to the target area in the above-mentioned vascular ultrasound image is also applicable to a target area roughly circular in other images, or a target area roughly circular and deformed by the push and pull of several points.

As an example, Fig. 8 shows target curve segment Q3 obtained by allocating allocated curve segment Q1 corresponding to the first discrete point set and allocated curve segment Q2 corresponding to the second discrete point set.

It should be noted that when applied to a target area other than a vascular ultrasound image, the weights of the first allocated point and the second allocated point can be adjusted according to the shape of the target, and do not represent a limitation of the present disclosure.

Fig. 9 is a flow chart showing an example of a method for annotating a vascular ultrasound image related to an example of the present disclosure. In the annotation method related to the examples of the present disclosure, the above-mentioned adjacent point connection method to determine the target curve segment of the two adjacent discrete points (also referred to as the adjacent point pair) may be used.

As shown in Fig. 9, in this embodiment, the annotation method may include step S302. In step S302, a plurality of discrete points of a contour of a target area in a vascular ultrasound image may be determined.

In some examples, a user's annotation operation on the contour of the target area in the vascular ultrasound image may be received to determine the plurality of discrete points of the contour of the target area. Specifically, display 150 may display the vascular ultrasound image, and the user may annotate the displayed vascular ultrasound image to collect the plurality of discrete points of the contour of the target area. However, the examples of the present disclosure are not limited thereto, in other examples, the plurality of discrete points of the contour of the target area may also be discrete points on the contour obtained by a target segmentation algorithm. In some other examples, the plurality of discrete points of the contour of the target area may also be discrete points pre-stored in a storage medium.

In some examples, the number of the plurality of discrete points may be greater than or equal to 3. For example, the number of the plurality of discrete points may be 3, 4, 5, 6, 7, 8, 9, 10, 12, 14, 16, 18 or 20. In addition, for the number of the plurality of discrete points being 3, as mentioned above, regardless of whether the allocating is performed based on the two allocated curve segments, the target curve segment is the allocated curve segment. Therefore, the target curve finally determined by the subsequent three discrete points may be a circle corresponding to the three discrete points.

In addition, for the vascular ultrasound image, the target area may include the area of at least one kind target in tunica media and intima (also referred to as lumen) of the blood vessel. Therefore, the target curve corresponding to the contour of the area of tunica media and intima of the blood vessel can be subsequently determined.

In some examples, the plurality of discrete points may be preprocessed. In some examples, the preprocessing may include deleting abnormal points among the plurality of discrete points. Wherein, the abnormal points may be discrete points that do not conform to the characteristics of the contour of the target area. In this case, the accuracy of the target curve can be subsequently improved.

As shown in Fig. 9, in this embodiment, the annotation method may include step S304. In step S304, the target path of the plurality of discrete points may be determined.

As mentioned above, the target path may be used to represent the adjacency relationship between each of discrete points. In some examples, the target path may be closed. Therefore, the plurality of discrete points may be represented as a circular array, wherein if $k=0$ may represent the first discrete point, then $k-1$ may represent the last discrete point. In other examples, the target path may not be closed.

In addition, the target path of the plurality of discrete points may be determined in any way. In some examples, the target path of the plurality of discrete points may be pre-set. For example, the user's setting of the adjacency relationship of the plurality of discrete points may be received to determine the target path of the plurality of discrete points. In some examples, the plurality of discrete points may be sorted to determine the target path of the plurality of discrete points.

Preferably, the target path of the plurality of discrete points may be determined by the polar coordinate system. Specifically, the polar coordinate system may be established; the coordinates of each of the plurality of discrete points are converted into the coordinates based on the polar coordinate system; and the plurality of discrete points are sorted according to the angles of the coordinates of the polar coordinate system corresponding to each of discrete points to determine the target path. In this case, the plurality of discrete points on the plane are sorted by surrounding through the polar coordinate system, and then the target path obtained by sorting can be more consistent with the characteristics of the contour of the target area. Therefore, the connection relationship (also referred to as the connection order) between the discrete points can be conveniently determined.

In some examples, the coordinates of each of discrete points may be the coordinates of a rectangular coordinate system. In some examples, for the plurality of discrete points with the coordinates of the rectangular coordinate system, in establishing the polar coordinate system, the coordinates of the geometric center of the plurality of discrete points may be obtained, and the coordinates of the geometric center are taken as the pole, and a preset direction is taken as the positive direction of the polar axis to establish the polar coordinate system. Therefore, the polar coordinate system can be established.

In addition, the preset direction may be any direction. Preferably, the preset direction may be horizontal to the right. In addition, for the plurality of discrete points whose coordinates are rectangular coordinates, the preset direction may also be the positive direction of the X-axis. It should be noted that, although the polar coordinate system is converted when determining the target path, the subsequent steps (e.g., step S306) may still use the original coordinate system (e.g., the rectangular coordinate system) as needed.

In some examples, after the target path of the plurality of discrete points is determined, if there are three collinear discrete points in the target path, the discrete points may be filtered so that there are no three collinear discrete points in the target path, and the target curve is obtained based on the filtered discrete points.

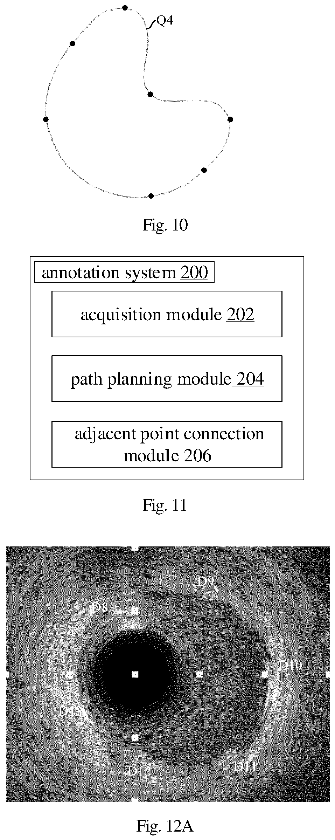

Fig. 10 is a schematic diagram showing target curve Q4 corresponding to the plurality of discrete points in Fig. 2.

As shown in Fig. 9, in this embodiment, the annotation method may include step S306. In step S306, the target curve segment between each pair of two adjacent discrete points may be determined in the target path, and the target curve corresponding to the contour of the target area is obtained. As an example, Fig. 10 shows target curve Q4 corresponding to the plurality of discrete points in Fig. 2.

In some examples, starting from any one of the plurality of discrete points along the target path in any direction, the target curve segment between each pair of two adjacent discrete points may be determined sequentially, and then the target curve corresponding to the contour of the target area may be obtained. That is, the step of determining the target curve segment between different two adjacent discrete points may be repeated until the two adjacent discrete points in the target path are traversed. In some examples, the target curve segment between the two adjacent discrete points may be determined using the above-mentioned adjacent point connection method.

In some examples, the annotation method may also include receiving an operation of deleting a discrete point or adding a discrete point to update the target curve (not shown). Specifically, the operation of deleting a discrete point or adding a discrete point by the user may be received, and the target curve segment associated with the deleted discrete point or the added discrete point may be updated (e.g., the target curve segment is deleted, or the target curve segment between the two adjacent discrete points is re-determined). Therefore, unreasonably annotated discrete points, complex portions of the contour, or irregular portions of the contour can be conveniently updated to obtain the more accurate target curve.

Hereinafter, annotation system 200 for a vascular ultrasound image related to the present disclosure will be described with reference to Fig. 11 (sometimes also referred to as annotation system 200, a target contour planning system or a target contour drawing system, hereinafter referred to as annotation system 200). Annotation system 200 may be used to implement the above-mentioned annotation method. It should be noted that, unless otherwise specified, the relevant descriptions of the above-mentioned annotation method is also applicable to annotation system 200. Fig. 11 is a block view showing an example of annotation system 200 for a vascular ultrasound image related to an example of the present disclosure.

In some examples, as shown in Fig. 11, annotation system 200 may include acquisition module 202, path planning module 204 and adjacent point connection module 206.

In this embodiment, acquisition module 202 may be used to determine a plurality of discrete points of a contour of a target area in a vascular ultrasound image. Specific contents may refer to the relevant descriptions of step S302, the descriptions thereof are omitted herein.

In this embodiment, path planning module 204 may be used to determine a target path of the plurality of discrete points. Specific contents may refer to the relevant descriptions of step S304, the descriptions thereof are omitted herein.

In this embodiment, adjacent point connection module 206 may be used to determine a target curve segment between each pair of two adjacent discrete points in the target path, and then obtain the target curve corresponding to the contour of the target area. Specific contents may refer to the relevant descriptions of step S306, the descriptions thereof are omitted herein.

The present disclosure also relates to an electronic device (not shown) which may include at least one processing circuit. The at least one processing circuit is configured to perform one or more steps in the above-mentioned annotation method.

The present disclosure also relates to a computer-readable storage medium, which may store at least one instruction, and when the at least one instruction is executed by a processor, one or more steps in the above-mentioned annotation method are implemented.

In the method, device and medium for annotating a vascular ultrasound image related to the examples of the present disclosure, a plurality of discrete points of a contour of a target area in the vascular ultrasound image and a target path of the plurality of discrete points are determined, a target curve segment between each pair of the two adjacent discrete points in the target path is determined, and then a target curve corresponding to the contour of the target area is obtained, and in determining the target curve segment of the two adjacent discrete points, four adjacent discrete points corresponding to the two adjacent discrete points are obtained, allocated curve segments for the two adjacent discrete points are respectively obtained based on the first three discrete points of the four discrete points and the corresponding concave direction, and the last three discrete points of the four discrete points and the corresponding concave direction, and the two allocated curve segments are allocated to obtain the target curve segment of the two adjacent discrete points. In this case, the target curve segment passing through the two adjacent discrete points is obtained by blending the circular arcs of the adjacent discrete points, so that the target curve that fits the contour of the target area can be obtained. In addition, the use of fewer discrete points to obtain the target curve corresponding to the contour of the target area can be supported and the computational volume is small. In addition, the concave direction is also determined by cross product. Therefore, the concave direction can be conveniently and quickly determined.

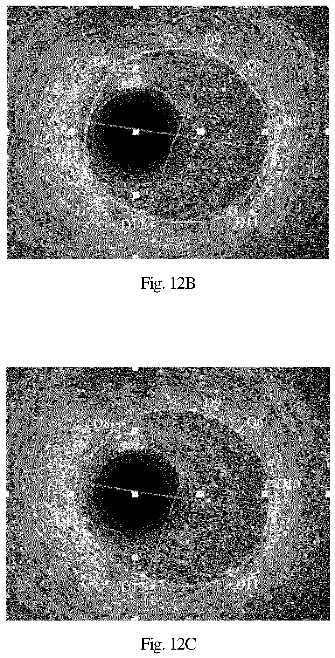

Fig. 12B is a schematic diagram showing the contour of the media corresponding to the plurality of discrete points of Fig. 12A obtained using a parabolic interpolation solution. Fig. 12B is a schematic diagram showing the contour of the media corresponding to the plurality of discrete points of Fig. 12A obtained using a parabolic interpolation solution. Fig. 12C is a schematic diagram showing the contour of the media corresponding to the plurality of discrete points of Fig. 12A obtained using a solution of the present disclosure.

In addition, in order to verify the effectiveness of the annotation method related to the examples of the present disclosure, a comparison is made with the parabolic interpolation solution. Fig. 12A shows 6 discrete points selected for a contour of the media, wherein the 6 discrete points may include discrete point D8, D9, D10, D11, D12, and D13. Fig. 12B is contour Q5 of the media drawn by the parabolic interpolation solution of a prior technology. Fig. 12C is contour Q6 of the media drawn by the solution of the present disclosure. It can be seen that the contour of the media drawn by the solution of the present disclosure is more rounded and accurate than that drawn by the parabolic interpolation solution, and than can provide accurate data for quantitative measurement (e.g., accurate calculation of plaque load).

Although the present disclosure has been described in detail with reference to the accompanying drawings and examples as above, it may be understood that the above description does not limit the present disclosure in any form. The present disclosure may be modified and varied as needed by those skilled in the art without departing from the essential spirit and scope of the present disclosure, and such modifications and variations fall within the scope of the present disclosure.

**Claims**

1. An annotation method for a vascular ultrasound image, **characterized in that**, comprising:

   determining a plurality of discrete points of a contour of a target area in the vascular ultrasound image;
   determining a target path of the plurality of discrete points, wherein the target path is closed; and
   in the target path, determining a target curve segment between each pair of two adjacent discrete points, and then obtaining a target curve corresponding to the contour,
   wherein, making each pair of two adjacent discrete points to be an adjacent point pair, determining the target curve segment of the adjacent point pair comprises:

   obtaining two discrete points in the target path except the discrete points of the adjacent point pair as two auxiliary points, wherein each of the two auxiliary points is adjacent to one discrete point of the adjacent point pair,
   determining two discrete point sets, wherein each of the two discrete point sets includes one auxiliary point of the two auxiliary points and the adjacent point pair, and auxiliary points of the two discrete point sets are different auxiliary points in the two auxiliary points,
   determining a allocated curve segment corresponding to each of the two discrete point sets based on a target circle and a concave direction both corresponding to each of the two discrete point sets, wherein the allocated curve segment is between the discrete points of the adjacent point pair and belongs to the target circle, the concave direction is determined by the positions and a preset order of the discrete points in each of the two discrete point sets; and
   performing allocating based on the two allocated curve segments corresponding to the two discrete point sets to obtain the target curve segment.

2. The annotation method of claim 1, **characterized in that**, determining the target path of the plurality of discrete points, further comprises:
   establishing a polar coordinate system; converting the coordinates of each of the plurality of discrete points into the coordinates based on the polar coordinate system; and sorting the plurality of discrete points according to the angles of the coordinates of the polar coordinate system to determine the target path.

3. The annotation method of claim 2, **characterized in that**, establishing the polar coordinate system, further comprises:

the coordinates of each of the plurality of discrete points are the coordinates of a rectangular coordinate system, obtaining the coordinates of the geometric center of the plurality of discrete points, taking the coordinates of the geometric center as a pole, and taking a preset direction as the positive direction of a polar axis to establish the polar coordinate system.

4. The annotation method of claim 1, **characterized in that**, determining the allocated curve segment corresponding to each of the two discrete point sets based on the target circle and the concave direction both corresponding to each of the two discrete point sets, further comprises:
in the target circle corresponding to each of the two discrete point sets, a circular arc from one discrete point of the adjacent point pair to another discrete point in the preset order, and in the concave direction is used as the allocated curve segment corresponding to each of the two discrete point sets.

5. The annotation method of claim 1, **characterized in that**, the concave direction is determined by the positions and the preset order of the discrete points in each of the two discrete point sets, further comprises:

making a first vector to be a vector from the first discrete point to the second discrete point in the preset order in each of the two discrete point sets, and making a second vector to be a vector from the first discrete point to the third discrete point in the preset order in each of the two discrete point sets; and
obtaining the cross product result of the first vector and the second vector as a third vector, if the direction of the third vector is upward, it is indicated that the concave direction is counterclockwise, if the direction of the third vector is downward, it is indicated that the concave direction is clockwise; or
if the angle of the first vector rotated clockwise to the second vector is less than 180°, it is indicated that the concave direction is clockwise; if the angle of the first vector rotated counterclockwise to the second vector is less than 180°, it is indicated that the concave direction is counterclockwise.

6. The annotation method of claim 1, **characterized in that**,
the target area includes the area of at least one kind target in tunica media and intima of the blood vessel.

7. The annotation method of claim 1, **characterized in that**, performing blending based on the two allocated curve segments corresponding to the two discrete point sets to obtain the target curve segment, further comprises:

using any discrete point in the adjacent point pair as a starting point;
starting from the starting point, determining a preset number of first allocated points evenly distributed along a first curve segment and the preset number of second allocated points evenly distributed along a second curve segment, wherein, the two allocated curve segments include the first curve segment and the second curve segment; and
determining interpolation points between the discrete points of the adjacent point pair based on the first allocated points and the second allocated points, and obtaining the target curve segment based on the interpolation points.

8. The annotation method of claim 7, **characterized in that**,

the first curve segment is the allocated curve segment corresponding to one of the two discrete point sets of which the auxiliary point is adjacent to the starting point, and the second curve segment is the allocated curve segment corresponding to one of the two discrete point sets of which the auxiliary point is not adjacent to the starting point, the coordinates $M_i$ of the i-th interpolation point between the discrete points of the adjacent point pair satisfy the formula:

$$M_i = \frac{(N-i)}{N} \times U_i + \frac{i}{N} \times V_i,$$

wherein, N represents the preset number, $U_i$ represents the coordinates of the i-th first allocated point, $V_i$ represents the coordinates of the i-th second allocated point.

9. An electronic device, **characterized in that**, comprising at least one processing circuit configured to perform the annotation method as in any one of claims 1 to 8.

10. A computer readable storage medium, **characterized in that**, the computer-readable storage medium stores at least one instruction, and when the at least one instruction is executed by a processor, the annotation method as in any one of claims 1 to 8 is implemented.

100

150

140

130

120

110

Fig. 1

D1

D7

L1

D2

D3

D6

D4

D5

Fig. 2

S102

obtaining the four discrete points including
the adjacent point pair

S104

determining the two discrete point sets based
on the four discrete points

S106

determining the allocated curve segments
corresponding to each of the two discrete
point sets based on a concave direction
corresponding to each of the two discrete
point sets

S108

performing blending based on the two
allocated curve segments corresponding to
the two discrete point sets to obtain the target
curve segment of the adjacent point pair

Fig. 3

Fig. 4A

Fig. 4B

Fig. 5A

Fig. 5B

Fig. 6

┌─────────────────────────────────────┐ ⌐S202
│ using any discrete point in the adjacent point │
│ pair as a starting point │
└─────────────────────────────────────┘
              ↓                          ⌐S204
┌─────────────────────────────────────┐
│ starting from the starting point, determining │
│ a preset number of first allocated points │
│ distributed along the first curve segment and │
│ the preset number of second allocated points │
│ distributed along the second curve segment │
└─────────────────────────────────────┘
              ↓                          ⌐S206
┌─────────────────────────────────────┐
│ determining the interpolation points between │
│ the discrete points of the adjacent point pair │
│ based on the first allocated points and the │
│ second allocated points, and obtaining the │
│ target curve segment of the adjacent point │
│ pair based on the interpolation points │
└─────────────────────────────────────┘

Fig. 7

Fig. 8

┌─────────────────────────────────────┐ ⌐S302
│ determining a plurality of discrete points of a │
│ contour of a target area in a vascular │
│ ultrasound image │
└─────────────────────────────────────┘
              ↓                          ⌐S304
┌─────────────────────────────────────┐
│ determining the target path of the plurality of │
│ discrete points │
└─────────────────────────────────────┘
              ↓                          ⌐S306
┌─────────────────────────────────────┐
│ determining the target curve segment │
│ between each pair of two adjacent discrete │
│ points in the target path, and obtaining the │
│ target curve corresponding to the contour of │
│ the target area │
└─────────────────────────────────────┘

Fig. 9

Fig. 10

Fig. 11

Fig. 12A

Fig. 12B

Fig. 12C

<table>
<tr><td colspan="2" align="center">**INTERNATIONAL SEARCH REPORT**</td><td>International application No.<br>**PCT/CN2022/128387**</td></tr>
</table>

**A.     CLASSIFICATION OF SUBJECT MATTER**

G06T 7/00(2017.01)i

According to International Patent Classification (IPC) or to both national classification and IPC

**B.     FIELDS SEARCHED**

Minimum documentation searched (classification system followed by classification symbols)

G06T

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, CNKI, IEEE: 血管, 标注, 定位, 离散点, 像素点, 路径, 封闭, 曲线, 方向, 目标圆, 凹陷, 辅助, vessel, annotation, location, discrete point, pixel point, path, closure, curve, direction, target circle, depression, assistance

**C.     DOCUMENTS CONSIDERED TO BE RELEVANT**

| Category* | Citation of document, with indication, where appropriate, of the relevant passages | Relevant to claim No. |
|---|---|---|
| PX | CN 114693664 A (SHENZHEN NORTH CORE LIFE TECHNOLOGY CO., LTD.) 01 July 2022 (2022-07-01)<br>    claims 1-10 | 1-10 |
| A | CN 112826535 A (QINGDAO HISENSE MEDICAL EQUIPMENT CO., LTD.) 25 May 2021 (2021-05-25)<br>    description, paragraphs 0130-0164 | 1-10 |
| A | CN 111127552 A (NANJING TENOKE MEDICAL TECHNOLOGY CO., LTD.) 08 May 2020 (2020-05-08)<br>    entire document | 1-10 |
| A | CN 109272512 A (NANCHANG HANGKONG UNIVERSITY) 25 January 2019 (2019-01-25)<br>    entire document | 1-10 |
| A | US 2021077062 A1 (KONINKLIJKE PHILIPS N. V.) 18 March 2021 (2021-03-18)<br>    entire document | 1-10 |

☐ Further documents are listed in the continuation of Box C.          ☑ See patent family annex.

| | |
|---|---|
| *     Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
|---|---|
| **18 December 2022** | **26 December 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
**Information on patent family members**

International application No.

**PCT/CN2022/128387**

| Patent document cited in search report | | | Publication date (day/month/year) | Patent family member(s) | | | Publication date (day/month/year) |
|---|---|---|---|---|---|---|---|
| CN | 114693664 | A | 01 July 2022 | None | | | |
| CN | 112826535 | A | 25 May 2021 | None | | | |
| CN | 111127552 | A | 08 May 2020 | None | | | |
| CN | 109272512 | A | 25 January 2019 | None | | | |
| US | 2021077062 | A1 | 18 March 2021 | EP | 3742973 | A1 | 02 December 2020 |
| | | | | WO | 2019145147 | A1 | 01 August 2019 |
| | | | | EP | 3513731 | A1 | 24 July 2019 |
| | | | | BR | 112020014733 | A2 | 08 December 2020 |
| | | | | CN | 111683600 | A | 18 September 2020 |
| | | | | JP | 2021510595 | A | 30 April 2021 |

Form PCT/ISA/210 (patent family annex) (January 2015)